# EUROPEAN PATENT APPLICATION

(11) **EP 4 686 419 A1**
(43) Date of publication of application: **04.02.2026**
(21) Application number: 24382829.0
(22) Date of filing: 29.07.2024
(51) Int. Cl.: A23L 33/115, A23L 33/175, A23L 33/18, A23L 33/185

(54) **FOOD COMPOSITION, AND USES THEREOF**

(71) Applicant: Salssa Enterprises S.L., 08034 Barcelona (ES)
(72) Inventor: Rocas Alonso, Pau, 08034 Barcelona (ES); Grífols Massana, Anna, 42367 Ciruela (Berlanga de Duero) (ES)
(74) Representative: Curell Suñol S.L.P.

(57) **Abstract**

The invention refers to a food composition comprising a base, said base comprising a blend of vegetables, preferably said base consisting essentially of a blend of vegetables, and a glutamine dipeptide.

## Description

### Field of the invention

The invention relates to a food composition. The invention further relates to uses of said food composition.

### State of the art

The demand for natural, health-oriented sports nutrition products is growing, and athletes increasingly seek clean, and effective nutritional supplements. Existing products often rely on combinations of synthetic or highly processed ingredients to be able to provide supplementation during sports. In addition to the non-natural origin, these products fail to address the varied needs of athletes in different sports disciplines or at different times relative to their training and competition schedules.

Plant-based ingredients as a source of nutrients in sports nutrition fulfil some of the above requirements. However, plant-based ingredients present several problems.

First, plant-based ingredients able to provide sufficient energy for the practice of sport have usually an undesired high level of simple carbohydrates in proportion to other important nutrients, particularly in proportion to protein, and more particularly in proportion to glutamine.

Second, increasing the amount of amino acids, particularly of glutamine in plant-based food products is challenging as amino acids, in particular glutamine, suffer from solubility and stability problems, particularly at the typically acidic pH that plant-based products tend to have. Protein or amino acids, and particularly glutamine, play an important role in muscle metabolism both with regards to increasing muscle mass and muscle recovery. Also, glutamine has been shown to provide benefits related to sports performance, and to promote a strong immune system and improve gut health in athletes.

Therefore, there is the need to provide sports nutrition products that overcome the above-mentioned problems.

### Summary of the invention

It is an object of the invention to provide a food composition that solves the above-mentioned problems. The invention aims to provide a food composition that combines the benefits of plant-based ingredients, such as their natural and sustainable origin and their rich nutrient profile, with little to no processing, with the benefits of balanced nutrient profile and a high content of amino acids, particularly a high content of glutamine, in a product that is stable, and appealing to the consumer, particularly athletes in the context of sport nutrition.

This purpose is achieved by a food composition of the type indicated at the beginning, characterized in that it comprises a base, said base comprising a blend of vegetables, preferably said base consisting essentially of a blend of vegetables, and a glutamine dipeptide.

The food composition according to the invention allows to provide a plant-based food composition, with a natural and sustainable origin and a rich and balanced nutrient profile with a high and stable content of amino acids, particularly with a high and stable content of glutamine. The food composition according to the invention further allows to provide a food product, particularly a nutritional supplement, that can be industrialized without sacrificing the use of natural ingredients and avoiding the need to use synthetic or highly processed additives to achieve a nutritional profile adapted to the consumer needs, particularly to improve performance and recovery in the practice of sports. The food composition according to the invention is a nutrient-dense, amino acids-rich product, particularly advantageous in the field of sport nutrition and has a long-lasting shelf life. In this regard, it is important to note that despite the presence of proteases in blended vegetable bases, which show increased activity at acidic pH, incorporating glutamine in the form of a glutamine dipeptide allows the obtention of a food composition with high and stable levels of glutamine over time.

It is another object of the invention to provide a use of a food composition according to the invention as nutritional supplement for improving performance in sport, preferably in resistance-based, strength-based, and power-based sports.

It is a further object of the invention to provide a use of a food composition according to the invention as nutritional supplement for the recovery during or after practising sports, preferably in resistance-based, strength-based, and power-based sports.

The food composition according to the invention, when consumed before, during and/or after the practice of sport, provides an improved performance and recovery of athletes by promoting muscle metabolism and repair as well as positively affecting the gut microbiota, thus improving gut health and boosting the athlete's immune system. The food composition according to the invention provides these benefits by combining high levels of glutamine, and other amino acids, in the form of a glutamine dipeptide together with providing a high nutritional profile from plant-based ingredients, thus simplifying the dietary pattern of athletes and avoiding the need to use multiple supplement and foods during the practice of sport. This not only allows to obtain a performance and/or recovery boosting nutrition in a simple manner, but also allows to avoid the negative effects of more complex dietary patterns, that can suffer from potential ingredient incompatibility, and cause a psychological burden for athletes who need to follow them. The food composition of the invention allows to achieve the same or even an improved top performance and nutritional requirements than traditional supplementation, while allowing the athlete to not lose focus and concentrate in performing or recovering rather than following a dietary plan pre, during, or post competition.

Likewise, the invention also includes other features of detail illustrated in the detailed description of several embodiments of the invention.

Preferably, said glutamine dipeptide is a dipeptide consisting of glutamine and an amino acid selected from the group consisting of alanine, arginine, asparagine, aspartic acid, cysteine, glutamine, glutamic acid, glycine, histidine, isoleucine, leucine, lysine, methionine, proline, serine, threonine, tryptophan, tyrosine, valine. More preferably, said glutamine dipeptide is a dipeptide consisting of L-glutamine and an amino acid selected from the group consisting of L-alanine, L-arginine, L-asparagine, L-aspartic acid, L-cysteine, L-glutamine, L-glutamic acid, glycine, L-histidine, L-isoleucine, L-leucine, L-lysine, L-methionine, L-proline, L-serine, L-threonine, L-tryptophan, L-tyrosine, L-valine. Even more preferably, said glutamine dipeptide is selected from the group consisting of Glycyl-L-glutamine, L-Glutamyl-L-Tyrosine, L-Glutamyl-L-Cysteine, and L-alanyl-L-glutamine. In a further preferred embodiment, said glutamine dipeptide is L-alanyl-L-glutamine.

Preferably, the food composition according to the invention comprises an amount of glutamine dipeptide between 0.1% w/w and 2% w/w with respect to the total weight of the composition.

Preferably, the food composition according to the invention has an acidic pH.

In the context of the invention an acidic pH is to be understood as a pH lower than 7.

Preferably, the food composition according to the invention has a pH lower than 7, and more preferably a pH lower than or equal than 6. In a further preferred embodiment, the food composition according to the invention the food composition according to the invention has a pH lower than 5. In another preferred embodiment, the food composition according to the invention has a pH higher than or equal to 2 and lower than 7. In a further preferred embodiment, the food composition according to the invention has a pH higher than or equal to 2 and lower than or equal to 6, and in an even more preferred embodiment the food composition according to the invention has a pH higher than or equal to 3 and lower than or equal to 5.

Preferably, the food composition according to the invention comprises an amount of carbohydrates between 5% w/w and 70% w/w, preferably between 10% w/w and 70% w/w, and more preferably between 25% w/w and 70% w/w, with respect to the total weight of the composition.

Preferably, the food composition according to the invention comprises an amount of sodium between 0.1% w/w and 0.5% w/w with respect to the total weight of the composition.

Preferably, the food composition according to the invention comprises an amount of lipids lower than 7% w/w, preferably lower than 5% w/w, with respect to the total weight of the composition.

Preferably, the food composition according to the invention comprises an amount of saturated fat lower than 2.5% w/w, preferably lower than 2% w/w, with respect to the total weight of the composition.

Preferably, the food composition according to the invention comprises an amount of protein between 4% w/w and 15% w/w, with respect to the total weight of the composition.

Preferably, the food composition according to the invention comprises an amount of nitrates between 0.0003% w/w and 0.05% w/w, with respect to the total weight of the composition.

Nitrates have a number of benefits in the context of sports, and evidence in the literature show that their supplementation helps to improve energy efficiency, and some studies show that they have a vasodilating effect by promoting the availability of nitric acid, thus improving performance during sport. Nitrates also can help in recovery by delaying muscle fatigue and has antioxidant and anti-inflammatory effects.

Preferably, the food composition according to the invention comprises
- an amount of carbohydrates between 5% w/w and 70% w/w, preferably between 10% w/w and 70% w/w, preferably between 25% w/w and 50% w/w, with respect to the total weight of the composition,
- an amount of sodium between 0.1% w/w and 0.5% w/w with respect to the total weight of the composition,
- an amount of lipids lower than 7% w/w, preferably lower than 5% w/w, with respect to the total weight of the composition, and
- an amount of saturated fat lower than 2.5% w/w, preferably lower than 2% w/w, with respect to the total weight of the composition.

This preferred embodiment of the food composition according to the invention is particularly advantageous as a nutritional supplement aimed to improve performance or recovery before, during and after the practice of sport.

Preferably, the food composition according to the invention comprises
- an amount of carbohydrates between 5% w/w and 70% w/w, preferably between 10% w/w and 70% w/w, preferably between 25% w/w and 50% w/w, with respect to the total weight of the composition,
- an amount of sodium between 0.1% w/w and 0.5% w/w with respect to the total weight of the composition,
- an amount of lipids lower than 7% w/w, preferably lower than 5% w/w, with respect to the total weight of the composition,
- an amount of saturated fat lower than 2.5% w/w, preferably lower than 2% w/w, with respect to the total weight of the composition, and
- an amount of protein between 4% w/w and 15% w/w, with respect to the total weight of the composition.

This preferred embodiment of the food composition according to the invention is particularly advantageous as a nutritional supplement aimed to improve muscle gain and recovery before, during and after the practice of sport due to is content of protein.

Preferably, the food composition according to the invention comprises sea salt, preferably an amount of sea salt between 0.3% w/w and 0.7% w/w of sea salt with respect to the total weight of the composition.

Using sea salt as a source of sodium is particularly advantageous due to the presence in said sea salt of other minerals such as magnesium, for example in the form of magnesium chloride, potassium, for example in the form of potassium chloride, and calcium, for example in the form of calcium chloride, calcium carbonate or gypsum calcium sulphate, zinc copper, iron, and iodine. All of these have beneficial effects when supplemented with the food composition according to the invention. Therefore, the use of sea salt reduces the need for additional supplementation of these elements using more expensive and refined sources.

Preferably, the source of carbohydrates consists essentially of whole plant-based ingredients, preferably consists essentially of at least one selected from the group consisting of whole fruits or derivatives thereof, whole cereals or derivatives products thereof, whole pseudocereals or derivatives thereof, whole root vegetables or derivatives thereof, and mixtures thereof. Preferred examples of whole fruits are banana, dates, berries, such as strawberries, blackberries, and raspberries, orange, pear, apricot, figs, plums, raisins, and sloes. Preferred examples of cereals are corn. A preferred example of pseudocereals is quinoa. Preferred examples of whole root vegetables are beetroot, potato, sweet potato, and yuca.

Using whole plant-based ingredients or derivatives thereof as a source of carbohydrates has the advantage of maintaining the glycaemic index of the food composition in a low to moderate range. This makes the food composition according to the invention a product which does not trigger insulin peaks and allows it to provide a healthier and long-lasting nutritional supplementation upon consumption.

In the context of the invention, a derivative of a whole fruit is a product obtained directly from the whole fruit by means of mechanical or thermal processes, such as pressing drying, blending, micing or the like, and without involving any refinement, thus conserving most of the nutritional properties of the whole fruit in the derivative product.

Preferably, the food composition according to the invention further comprises honey, maple syrup, agave syrup, locust bean syrup, and cane sugar. These ingredients reaming minimally processed ingredients which can be used as an additional source of carbohydrates and/or as flavouring agents, as despite their high carbohydrate content their glycaemic index remains low or moderate.

Preferably, the food composition according to the invention has a low or moderate glycaemic index. More preferably, the food composition according to the invention has a glycaemic index lower than or equal to 69, even more preferably lower than or equal to 55.

In the context of the invention, a low glycaemic index is a glycaemic index comprised in the range between 0 and 55, and a moderate glycaemic index is a glycaemic index comprised in the range between 56 and 69. The glycaemic index is a measure of the effect of a specific amount of a food composition on blood sugar compared with the same amount of pure glucose. For example, a food composition with a glycaemic index of 55 increases blood sugar a 55% with respect to the increase of blood sugar caused by pure glucose at equivalent amounts, for example, for an equal weight of food composition and pure glucose being consumed.

Preferably, the source of protein consists essentially of plant-based ingredients, preferably consists essentially of at least one selected from the group consisting of leguminous plants or derivatives thereof and cereal or derivative thereof. Preferred examples of derivatives thereof of leguminous plants are soybeans.

Preferably, the source of fat consists essentially of plant-based fats, more preferably consists essentially of at least one vegetable oil, and even more preferably consists essentially of at least one selected from the group consisting of olive oil, sunflower oil, avocado oil, chia oil, sesame oil, flaxseed oil, and rapeseed oil. In a further preferred embodiment, the source of fat consists essentially of olive oil, and even more preferably from virgin olive oil or extra virgin olive. Olive oil contains squalene, which has antioxidant and anti-inflammatory properties, and thus make olive oil a particularly advantageous source of fats for a nutritional supplement to compensate for the oxidation and inflammation likely to occur in tissues during the practice of high intensity sport.

In the context of the invention virgin olive oil is an olive oil that is unrefined and cold pressed. Extra virgin olive oil is also an unrefined and cold pressed olive oil that fulfils strict quality criteria defined by Codex Alimentarius and International Olive Council (IOC), and mainly related to its flavour and odour and to its free fatty acid content.

Preferably, the source of nitrates consists essentially of plant-based nitrates, preferably consists essentially of at least one selected from the group consisting of pomegranate, cherry, beetroot, watermelon, and derivatives thereof.

Preferably, the food composition according to the invention comprises or consists essentially of one of the following combinations of ingredients:
- banana, pomegranate juice or acidic cherry juice, beetroot, olive oil, ginger, dates, and almond;
- corn meal, potato, vegetable broth, olive oil, and cinnamon;
- strawberries, dates, soy protein, and pomegranate juice;
- pear, pomegranate, blackberries, and orange;
- pear, apricot, raspberries, quinoa, and soy protein

In the context of the invention, a resistance-based is a sport where the resistance or endurance component is predominantly the one to be trained to achieve peak performance. Examples of resistance-based sports include running, cycling, swimming and combinations thereof such as triathlon, rowing, surfing, mountaineering, climbing, skating, and Nordic/cross-country skiing, and combination and modalities thereof.

In the context of the invention, a strength-based is a sport where the strength component is predominantly the one to be trained to achieve peak performance. Examples of strength-based sports include calisthenics, weightlifting, and CrossFit.

In the context of the invention, a power-based is a sport where the power component is predominantly the one to be trained to achieved peak performance. Example of power-based sports include combat sports, gymnastics, ball games, racquet sports, ice sports such as ice hockey, board sports such as surf or kitesurf, frisbee, and obstacle courses racing.

### Detailed description of embodiments of the invention

The compositions and nutritional analysis described below correspond to exemplary and non-limiting preferred embodiments of the invention, comprising a base, said base consisting essentially of a blend of vegetables, and a glutamine dipeptide.

In the context of the invention, a blend of vegetables is to be understood as a mixture of vegetables that has been processed to a liquid or paste form, preferably by mechanical means.

Preferably, a blend of vegetables can be obtained by blending any of the following combinations of ingredients, using equipment known by the skilled person in the art such as an industrial blender, e.g. a high-pressure blender:
- banana, pomegranate juice or acidic cherry juice, beetroot, olive oil, ginger, dates, and almond;
- corn meal, potato, vegetable broth, olive oil, and cinnamon;
- strawberries, dates, soy protein, and pomegranate juice;
- pear, pomegranate, blackberries, and orange;
- pear, apricot, raspberries, quinoa, and soy protein.

The blend of vegetables thus obtained can further preferably be processed by mechanical means, such as sieving, to improve texture properties thereof. For example, to avoid the presence of clumps, or of parts of the used vegetables that do not blend well such as the peal, or the seeds.

### Example Food composition 1

In a first preferred embodiment, the food composition according to the invention comprises a base, said base consists essentially of a blend of vegetables, such as the ones listed in Table 1 below, and a glutamine dipeptide.

| **Ingredient** | **Weight (per kg of food composition)** |
|---|---|
| Ripe banana | 340 g |
| Pomegranate juice | 200 g |
| Beetroot | 100 g |
| Extra virgin olive oil | 50 g |
| Sea salt | 4.5 g |
| Ginger | 0.5 g |
| Dates (without kernel) | 100 g |
| Oat based drink | 300 g |
| L-Alanyl-L-Glutamine | 5 g |

| | **(per kg of food composition)** |
|---|---|
| Calories (kcal) | 1244 |
| Carbohydrates (HC) (g) | 176 |
| Fat (g) | 55 |
| Protein (g) | 11 |
| Sodium (mg) | 1452 |
| Sugar (g) | 134 |

Nutritional profile in a 150 g portion of Food composition 1
186.6 kcal
26.7 g Carbohydrates
217.8 mg Sodium
750 mg L-Alanyl-L-Glutamine

This first preferred embodiment of the food composition according to the invention has an advantageous content of L-Alanyl-L-Glutamine dipeptide, which allows it to have a high content of the amino acids Alanine and Glutamine. These amino acids in the form of dipeptide remain soluble in the food composition and are stable over time, making the Example Food Composition 1 a long-lasting nutritional supplement able to conserve its nutritional properties for as long as at least 1 year. The plant-based base used in this first embodiment aims to provide a sweet taste like the one found in more traditional sweet nutritional supplements and allows to provide a balanced nutrition during the practice of sports, preferably resistance sports.

The following examples of preferred embodiments of the food composition according to the invention (Examples 2 to 5) aim to show, without implying any limitations, how using a glutamine dipeptide, irrespective of the particular ingredients used in the vegetable base, allows to provide a food composition with a high content of amino acids, preferably glutamine, which is stable and that can be tailored to the practice of various types of sports.

### Example Food composition 2

| **Ingredient** | **Weight (per kg of food composition)** |
|---|---|
| Corn meal | 400 g |
| Potato | 100 g |
| Vegetable broth | 450 g |
| Extra virgin olive oil | 45 g |
| Sea salt | 4.5 g |
| L-Alanyl-L-Glutamine | 5 g |

| | **(per kg of food composition)** |
|---|---|
| Calories (kcal) | 1936 |
| Carbohydrates (HC) (g) | 389 |
| Fat (g) | 56 |
| Protein (g) | 13 |
| Sodium (mg) | 1615 |
| Sugar (g) | 1 |

Nutritional profile in a 150 g portion of Food composition 2
290.4 kcal
58.35 g Carbohydrates
242.25 mg Sodium
750 mg L-Alanyl-L-Glutamine

In this second preferred embodiment of the food composition according to the invention the content of carbohydrate is of about 40% w/w with respect to the total weight of the composition. This carbohydrate content makes it an advantageous product for athletes needing a high amount of carbohydrates in a small portion easy to be consumed during the practice of sport. In addition, combining a high carbohydrate load with the presence of glutamine and alanine in the form of the L-Alanyl-L-glutamine peptide, and a high sodium content, makes this Example food composition 2 an advantageous product to be consumed during the practice of resistance sports to improve performance.

### Example Food composition 3

| **Ingredient** | **Weight (per kg of food composition)** |
|---|---|
| Strawberries | 200 g |
| Dates (without kernel) | 250 g |
| Soybean protein | 150 g |
| Pomegranate juice | 390 g |
| Sea salt | 5 g |
| L-Alanyl-L-Glutamine | 5 g |

| | **(per kg of food composition)** |
|---|---|
| Calories (kcal) | 1484 |
| Carbohydrates (HC) (g) | 229 |
| Fat (g) | 56 |
| Protein (g) | 131 |
| Sodium (mg) | 2727 |
| Sugar (g) | 193 |

Nutritional profile in a 150 g portion of Food composition 3
222.6 kcal
34.35 g Carbohydrates
19.65 g Protein
408.75 mg Sodium
750 mg L-Alanyl-L-Glutamine

This third preferred embodiment of the food composition according to the invention is aimed at providing a healthier alternative to the traditional recovery supplements. It provides an appropriate carbohydrate/protein ratio of 1.7/1 and its high sodium content makes it an advantageous product, which combined with sufficient hydration, allows an improved recovery after sport.

### Example Food composition 4

| **Ingredient** | **Weight (per kg of food composition)** |
|---|---|
| Pear | 640 g |
| Pomegranate | 150 g |
| Blackberries | 100 g |
| Orange | 100 g |
| Sea salt | 5 g |
| L-Alanyl-L-Glutamine | 5 g |

| | **(per kg of food composition)** |
|---|---|
| Calories (kcal) | 502 |
| Carbohydrates (HC) (g) | 128 |
| Fat (g) | 1 |
| Protein (g) | 5 |
| Sodium (mg) | 1539 |
| Sugar (g) | 72 |

Nutritional profile in a 150 g portion of Food composition 4
75.3 kcal
19.2 g Carbohydrates
0.75 g Protein
230.85 mg Sodium
750 mg L-Alanyl-L-Glutamine

In this fourth preferred embodiment, the food composition according to the invention has a high content of antioxidants and nitrates, which helps to compensate for the increase of lactate and free radicals occurring during the practice of sport. This, combined with the high content in amino acids due to the presence of L-Alanyl-L-Glutamine dipeptide, makes it a food composition advantageous for being used during the practice of high-intensity and strength/power sports, for example by taking 2 portions per hour.

### Example Food composition 5

| **Ingredient** | **Weight (per kg of food composition)** |
|---|---|
| Pear | 600 g |
| Apricot | 150 g |
| Raspberries | 150 g |
| Quinoa flakes | 50 g |
| Soybean protein | 40 g |
| Sea salt | 5 g |
| L-Alanyl-L-Glutamine | 5 g |

| | **(per kg of food composition)** |
|---|---|
| Calories (kcal) | 796 |
| Carbohydrates (HC) (g) | 150 |
| Fat (g) | 6 |
| Protein (g) | 48 |
| Sodium (mg) | 1933 |
| Sugar (g) | 74 |

Nutritional profile in a 150 g portion of Food composition 5
119.4 kcal
22.5 g Carbohydrates
0.9 g Lipids
7.2 Protein
289.95 mg Sodium
750 mg L-Alanyl-L-Glutamine

In a fifth preferred embodiment of the invention, the food composition according to the invention provides a carbohydrate/protein ratio of 3:1 which avoids the need to take intra-training protein supplements when consumed during the practice of strength sports. This ratio carbohydrate/protein ratio combined with a high content in amino acids such as alanine and glutamine make it advantageous as a recovery supplement during the practice of resistance sports, with for example a dose of two 150 g portions during / after training.

## Claims

1. Food composition **characterized in that** it comprises
- a base, said base comprising a blend of vegetables, preferably said base consisting essentially of a blend of vegetables, and
- a glutamine dipeptide.

2. Food composition according to claim 1, **characterized in that** said glutamine dipeptide is a dipeptide consisting of glutamine and an amino acid selected from the group consisting of alanine, arginine, asparagine, aspartic acid, cysteine, glutamine, glutamic acid, glycine, histidine, isoleucine, leucine, lysine, methionine, proline, serine, threonine, tryptophan, tyrosine, valine, preferably said glutamine dipeptide is selected from the group consisting of glycyl-L-glutamine, L-glutamyl-L-tyrosine, L-glutamyl-L-cysteine, and L-alanyl-L-glutamine, and even more preferably said glutamine dipeptide is L-alanyl-L-glutamine.

3. Food composition according to any one of claims 1 or 2, **characterized in that** it comprises an amount of glutamine dipeptide between 0.1% w/w and 2% w/w with respect to the total weight of the composition.

4. Food composition according to any one of claims 1 to 3, **characterized in that** it comprises an amount of carbohydrates between 5% w/w and 70% w/w, preferably between 10% w/w and 70% w/w, and more preferably between 25% w/w and 70% w/w, with respect to the total weight of the composition.

5. Food composition according to claims 1 to 4, **characterized in that** it comprises an amount of sodium between 0.1% w/w and 0.5% w/w with respect to the total weight of the composition.

6. Food composition according to claims 1 to 5, **characterized in that** it comprises an amount of lipids lower than 7% w/w, preferably lower than 5% w/w, with respect to the total weight of the composition.

7. Food composition according to claims 1 to 6, **characterized in that** it comprises an amount of saturated fat lower than 2.5% w/w, preferably lower than 2% w/w, with respect to the total weight of the composition.

8. Food composition according to claims 1 to 7, **characterized in that** it comprises an amount of protein between 4% w/w and 10% w/w, with respect to the total weight of the composition.

9. Food composition according to any one of claims 1 to 3, **characterized in that** it comprises
- an amount of carbohydrates between 5% w/w and 70% w/w, preferably between 10% w/w and 70% w/w, preferably between 25% w/w and 50% w/w, with respect to the total weight of the composition,
- an amount of sodium between 0.1% w/w and 0.5% w/w with respect to the total weight of the composition,
- an amount of lipids lower than 7% w/w, preferably lower than 5% w/w, with respect to the total weight of the composition,
- an amount of saturated fat lower than 2.5% w/w, preferably lower than 2% w/w, with respect to the total weight of the composition, and preferably
- an amount of protein between 4% w/w and 10% w/w, with respect to the total weight of the composition.

10. Food composition according to claims 1 to 9, **characterized in that** it comprises sea salt, preferably an amount of sea salt between 0.3% w/w and 0.7% w/w of sea salt with respect to the total weight of the composition.

11. Food composition according to claims 1 to 10, **characterized in that** the source of carbohydrates consists essentially of plant-based ingredients, preferably consists essentially of at least one selected from the group consisting of fruits or derivatives thereof, whole cereals or derivatives products thereof, whole pseudocereals or derivatives thereof, root vegetables or derivatives thereof, and mixtures thereof.

12. Food composition according to claims 1 to 11, **characterized in that** the source of protein consists essentially of plant-based ingredients, preferably consists essentially of at least one selected from the group consisting of leguminous or derivatives thereof and cereal or derivative thereof.

13. Food composition according to claims 1 to 12, **characterized in that** the source of fat consists essentially of plant-based fats, preferably consists essentially of at least one vegetable oil, more preferably comprises or consists essentially of at least one selected from the group consisting of olive oil, sunflower oil, avocado oil, chia oil, sesame oil, flaxseed oil, and rapeseed oil.

14. Use of a food composition according to any one of claims 1 to 13 as nutritional supplement for improving performance in sport, preferably in resistance-based, strength-based, and power-based sports.

15. Use of a food composition according to any one of claims 1 to 13 as nutritional supplement for the recovery during or after practising sports, preferably in resistance-based, strength-based, and power-based sports.
